Europäisches Patentamt

European Patent Office

Office européen des brevets

(11) Veröffentlichungsnummer: **0 355 481**
**A1**

## (12) EUROPÄISCHE PATENTANMELDUNG

(21) Anmeldenummer: 89114081.6

(22) Anmeldetag: 31.07.89

(51) Int. Cl.4 **C01F 7/02** , **C01F 7/30** ,
**C09K 3/14**

(30) Priorität: 17.08.88 DE 3827898

(43) Veröffentlichungstag der Anmeldung:
**28.02.90 Patentblatt 90/09**

(84) Benannte Vertragsstaaten:
**AT BE CH DE ES FR GB GR IT LI LU NL SE**

(71) Anmelder: **Degussa Aktiengesellschaft**
**Weissfrauenstrasse 9**
**D-6000 Frankfurt am Main 1(DE)**

(72) Erfinder: **Sextl, Gerhard, Dr.**
**Drosselweg 1**
**D-6458 Rodenbach 2(DE)**
Erfinder: **Zimmermann, Rolf, Dr.**
**Grünaustrasse 11**
**D-6450 Hanau 9(DE)**
Erfinder: **Kleinschmit, Peter, Dr.**
**Wildaustrasse 19**
**D-6450 Hanau 9(DE)**
Erfinder: **Schwarz, Rudolf, Dr.**
**Taunusstrasse 2**
**D-8755 Wasserlos(DE)**

(54) **Alpha-Aluminiumoxid sowie Verfahren zur Herstellung von Alpha-Aluminiumoxid.**

(57) α-Aluminiumoxid mit einer mittleren Teilchengröße von 0,1 bis 0,2 μm, mit einer porenfreien Oberfläche, einer annähernd kugelförmigen Gestalt und einem Gehalt an α-Aluminiumoxid von mehr als 50 % kann hergestellt werden, indem man γ-Aluminiumoxid in einer Flamme thermisch behandelt. Das γ-Aluminiumoxid kann auf pyrogenem Wege flammenhydrolytisch aus Aluminiumtrichlorid hergestellt sein.

BRENNGAS

$Al_2O_3$-C +
BRENNGAS

SAUERSTOFF

$Al_2O_3$-C +
BRENNGAS

Fig. 2

EP 0 355 481 A1

## α-Aluminiumoxid sowie Verfahren zur Herstellung von α-Aluminiumoxid

Die Erfindung betrifft ein Verfahren zur Herstellung von α-Aluminiumoxid.

α-Aluminiumoxid ist ein bekanntes Handelsprodukt. Es weist gröbere Partikel mit Durchmessern von mehreren Mikrometern und eine niedrige spezifische Oberfläche von $\leq$ 15 m² / g auf.

Das bekannte α-Aluminiumoxid hat den Nachteil, daß es für manche Anwendungszwecke, wie zum Beispiel Polieren von Oberflächen oder elektronische Verpackungen, zu grobkörnig ist.

Die Aufgabe der Erfindung besteht darin, ein α-Aluminiumoxid herzustellen, welches eine ausreichende Feinteiligkeit für die Verwendung als zum Beispiel Poliermittel oder für elektronische Verpackungen aufweist.

Gegenstand der Erfindung ist ein α-Aluminiumoxid mit einer mittleren Teilchengröße von 0,1 bis 0,2 μm, mit einer porenfreien Oberfläche, einer annähernd kugelförmigen Gestalt und einem Gehalt an α-Aluminiumoxid von mehr als 50 %.

Die Größe der Primärteilchen kann 0,1 bis 0,6 μm betragen.

Die Größe der Sekundärteilchen (Agglomerate) kann 1 bis 15 μm betragen.

Die Schüttdichte des erfindungsgemäßen Produktes kann 150 ± 40 g / l und die spezifische Oberfläche (BET) kann 40 ± 5 m² / g betragen.

Der α-Phasenanteil des erfindungsgemäßen Aluminiumoxides kann vorzugsweise 70 bis 90 Gew.-% betragen.

Das erfindungsgemäße α-Aluminiumoxid kann vorteilhafterweise als Poliermittel eingesetzt werden.

Ein weiterer Gegenstand der Erfindung ist ein Verfahren zur Hestellung des α-Aluminiumoxides mit einer mittleren Teilchengröße von 0,1 bis 0,2 μm, mit einer porenfreien Oberfläche, einer annähernd kugelförmigen Gestalt und einem Gehalt an α-Aluminiumoxid von mehr als 50 %, welches dadurch gekennzeichnet ist, daß man γ-Aluminiumoxid in einer Flamme thermisch behandelt.

In einer besonderen Ausführungsform der Erfindung kann man die thermische Behandlung in einem Reaktor durchführen, der auf eine Temperatur von > 1000 °C aufgeheizt wurde.

Vorzugsweise kann in der Flamme eine Temperatur von mehr als 1200 °C herrschen.

In einer bevorzugten Ausführungsform kann man als γ-Aluminiumoxid ein γ-Aluminiumoxid einsetzen, das auf pyrogenem Wege flammenhydrolytisch aus Aluminiumtrichlorid hergestellt wurde.

Das γ-Aluminiumoxid kann man gemeinsam mit dem Brenngas dem Brenner zuführen.

In einer besonderen Ausführungsform kann man die thermische Behandlung in einem Quarzrohr durchführen.

Als Brenngas kann man Wasserstoff oder Kohlenmonoxid einsetzen, wobei Kohlenmonoxid bevorzugt wird.

Bei der Durchführung des erfindungsgemäßen Verfahrens können die folgenden Versuchsbedingungen eingehalten werden:

Kohlenmonoxid (innere Düse des Brenners):

1,3 bis 1,7 m³ / h

Kohlenmonoxid (äußerer Brennermantel):

0,2 bis 0,6 m³ / h

Sauerstoff (innerer Brennermantel):

0,8 bis 1,1 m³ / h

-Aluminiumoxid-Zudosierung (innere Düse):

1,7 bis 2,3 kg / h

Das einsetzbare γ-Aluminiumoxid kann auf pyrogenem Wege flammenhydrolytisch aus Aluminiumtrichlorid hergestellt werden. Die Herstellung kann analog dem Aerosil-Verfahren, das in Angewandte Chemie 72, (19/2), S. 744 - 750 (1960) und in Kautschuk und Gummi, Kunststoffe 20, 10, S. 578 - 586 (1967) beschrieben wird, erfolgen.

Das γ-Aluminiumoxid weist neben γ- und δ-Aluminiumoxid nicht-kristalline Anteile auf. Die mittlere Teilchengröße beträgt ca. 20 Nanometer, wobei die Teilchengrößenverteilung in einem sehr engen Bereich liegt. Die spezifische Oberfläche beträgt 100 ± 15 m² / g.

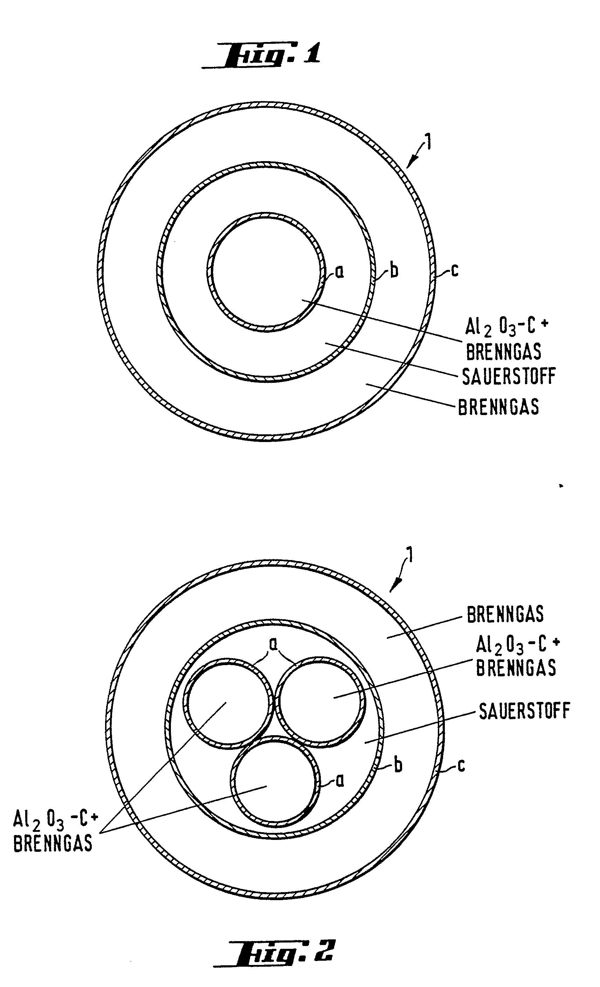

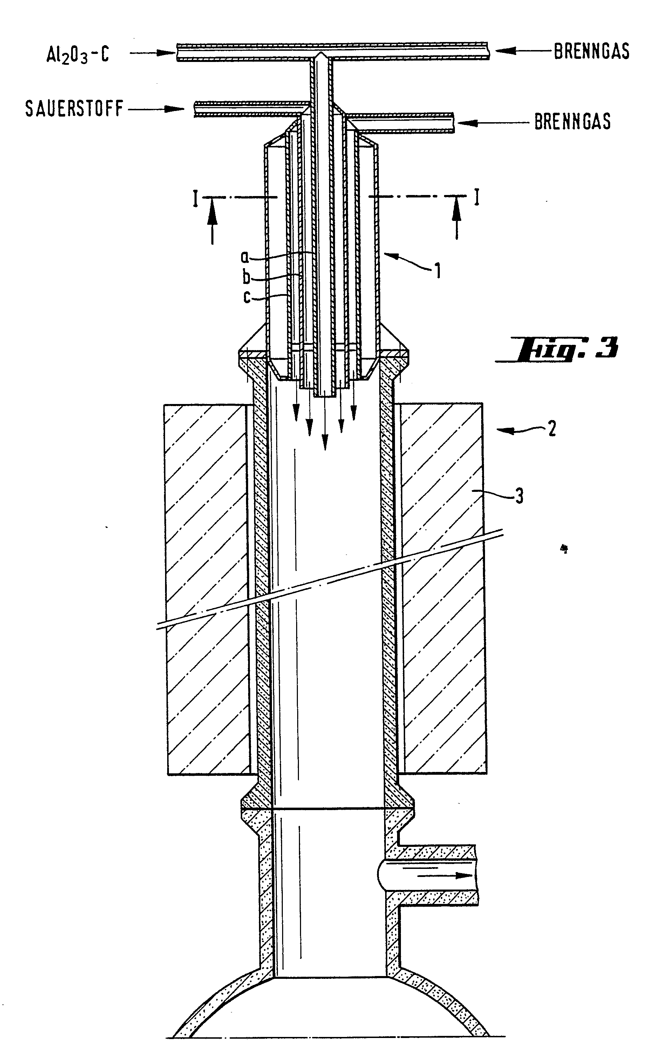

Gemäß Erfindung können zwei verschiedene Brenner eingesetzt werden, die beide die getrennte Zugabe von drei verschiedenen Gasen beziehungsweise Produktströmen erlauben. Die Querschnitte dieser Brenner sind in den Figuren 1 und 2 dargestellt.

Gemäß Figur 1 besteht der Brenner aus drei konzentrisch angeordneten Röhren.

Gemäß Figur 2 besteht der Brenner aus zwei konzentrischen Röhren, wobei innerhalb der engeren Röhre drei Röhren parallel zueinander angeordnet sind.

Bei beiden Brennern 1 wird durch die Röhre a beziehungsweise Röhren a ein Strom eines Brenngases zusammen mit pulverförmigem Aluminiumoxid c in den Reaktor 2 eingegeben.

Ein Rohr b wird derart um die Röhre bzw. Röhren a angeordnet, daß sich ein Ringraum zwischen der Röhre bzw. Röhren a und dem Rohr b ausbildet, durch welchen ein Sauerstoffstrom in Richtung Brenneröffnung geführt wird.

Ebenso wird um das Rohr b ein Rohr c angeordnet. In dem durch die Rohre b und c gebildeten Ringraum wird Brenngas in Richtung Brenneröffnung geführt, an welcher sich eine Mantelflamme ausbildet.

Figur 3 zeigt einen schematischen Längsschnitt eines Reaktors mit einer Brenneranordnung gemäß Figur 1.

Gemäß Figur 3 wird als Reaktor 2 eine Quarzröhre verwendet, die extern mittels der Heizvorrichtung 3 auf eine Temperatur von 1100 °C geheizt wird.

Bevorzugt wird ein Reaktor gemäß Figur 3 eingesetzt.

Das erfindungsgemäße Verfahren weist den Vorteil auf, daß man ein $\alpha$-Aluminiumoxid erhält, welches in etwa dieselbe Teilchengrößenverteilung aufweist wie das Ausgangsprodukt.


Beispiel

Als Brenngas wird Kohlenmonoxid und ein Reaktor gemäß Figur 3 eingesetzt.

Als Ausgangsstoff wird ein auf pyrogenem Wege hergestellter $\gamma$-Aluminiumoxid eingesetzt, das durch die folgenden physikalisch-chemischen Kenndaten gekennzeichnet ist:

|  |  | Aluminiumoxid C |
|---|---|---|
| BET-Oberfläche | $m^2/g$ | 100±15 |
| mittlere Größe der Primärteilchen | Millimikron | 20 |
| Schüttgewicht | g/l | ca. 60 |
| Stampfvolumen (DIN 53 194) | ml/100 g | ca. 1600 |
| Trocknungsverlust (DIN 53 198, Verfahren A) (2 Stunden bei 105 °C) | % | < 5 |
| Glühverlust[**] (DIN 52 911) (2 Stunden bei 1000 °C) | % | < 3 |
| pH-Wert (in 4 %iger wäßriger Dispersion)(DIN 53 200) |  | 4 -5 |
| Röntgenstruktur |  | überwiegend Gamma |
| isoelektrischer Punkt bei pH-Wert |  | 9,0 |
| $Al_2O_3$[**] | % | > 97 |
| TiO2 | % | < 0,1 |
| $SiO_2$ | % | < 0,1 |
| $Fe_2O_3$ | % | < 0,2 |

[**] bezogen auf die 2 Stunden bei 105 °C getrocknete Substanz


Das $\gamma$-Aluminiumoxid c wird unter Verwendung des Reaktors gemäß Figur 3 unter den folgenden Versuchsbedingungen behandelt:

CO (innere Düse des Brenners): 1,4 $m^3/h$

CO (äußerer Brennermantel): 0,25 $m^3/h$

$O_2$ (innerer Brennermantel): 0,85 $m^3/h$

$Al_2O_3$-Zudosierung (innere Düse): 2,0 kg/h

Trägergas für $Al_2O_3$-Zudosierung: 0,5 $m^3/h$ (Argon)

Temperatur Quarzfallrohr: 700 ± 100 °C

Das behandelte Aluminiumoxid weist die folgenden Eigenschaften auf:

Schüttdichte: 150 ± 40 g/l

Spezifische Oberfläche (BET): 40 ± 5 $m^2/g$

Größe der Primärteilchen : 0,1 bis 0,5 $\mu$m

Größe der Sekundärteilchen: 1 - 15 $\mu$m (Agglomerate)

$\alpha$-Phasen-Anteil: 70 - 90 % [1]

Der Anteil an entstehendem $\alpha$-Aluminiumoxid wird durch Lagerung des getrockneten Aluminiumoxides an feuchter Luft ermittelt. Im Gegensatz zu $\alpha$-Aluminiumoxid absorbiert $\gamma$-Aluminiumoxid Wasser. Wenn man $\gamma$-Aluminiumoxid c, welches kein $\alpha$-Aluminiumoxid enthält, gleichzeitig mit den thermisch behandelten Produkten bei feuchter Luft lagert, kann man an Hand der Feuchtigkeitsaufnahme Rückschlüsse auf den Gehalt an gebildetem $\alpha$-Aluminiumoxid machen.

## Ansprüche

1. $\alpha$-Aluminiumoxid mit einer mittleren Teilchengröße von 0,1 bis 0,2 $\mu$m, mit einer porenfreien Oberfläche, einer annähernd kugelförmigen Gestalt und einem Gehalt an $\alpha$-Aluminiumoxid von mehr als 50 %.

2. Verfahren zur Herstellung des $\alpha$-Aluminiumoxides mit einer Teilchengröße von 0,1 bis 0,2 $\mu$m, mit einer porenfreien Oberfläche, einer annähernd kugelförmigen Gestalt und einem Gehalt an $\alpha$-Aluminiumoxid von mehr als 50 % nach Anspruch 1, dadurch gekennzeichnet, daß man $\gamma$-Aluminiumoxid in einer Flamme thermisch behandelt.

3. Verfahren nach Anspruch 2, dadurch gekennzeichnet, daß man die thermische Behandlung in einem Reaktor durchführt, der auf eine Temperatur von > 1000 °C aufgeheizt wurde.

4. Verfahren nach den Ansprüchen 2 und 3, dadurch gekennzeichnet, daß in der Flamme eine Temperatur von mehr als 1200 °C herrscht.

5. Verfahren nach den Ansprüchen 2 bis 4, dadurch gekennzeichnet, daß man als $\gamma$-Aluminiumoxid ein $\gamma$-$Al_2O_3$ einsetzt, das auf pyrogenem Wege flammenhydrolytisch aus Aluminiumtrichlorid hergestellt wurde.

6. Verfahren nach den Ansprüchen 2 bis 5, dadurch gekennzeichnet, daß das $\gamma$-Aluminiumoxid gemeinsam mit dem Brenngas dem Brenner zuführt.

7. Verfahren nach den Ansprüchen 2 bis 6, dadurch gekennzeichnet, daß man die Behandlung in einem Quarzrohr durchführt.

8. Verfahren nach Anspruch 7, dadurch gekennzeichnet, daß man die Behandlung in einem von außen beheizten Quarzrohr durchführt und dabei eine Brenneranordnung verwendet, die aus drei konzentrischen Röhren besteht.

9. Verfahren nach Anspruch 7, dadurch gekennzeichnet, daß man die Behandlung in einem von außen beheizten Quarzrohr durchführt und dabei eine Brennervorrichtung verwendet, die aus zwei konzentrischen Röhren besteht, wobei innerhalb der engeren Röhre drei Röhren parallel zueinander angeordnet sind.

[1] Der Anteil an $\alpha$-Aluminiumoxid kann nur grob abgeschätzt werden, da die für eine genaue Bestimmung notwendigen Eichsubstanzen mit hoher spezifischer Produktoberfläche und geeigneter Teilchengrößenverteilung nicht existieren. Das erfindungsgemäße Verfahren liefert neuartige $\alpha$-$Al_2O_3$-Produkte, die bis jetzt nicht hergestellt werden konnten. Es ist deshalb unmöglich, Eichpräparate für eine quatitative Phasenanalyse zu bekommen.

4

Fig. 1

Fig. 2

$Al_2O_3-C$ ← → BRENNGAS

SAUERSTOFF ← → BRENNGAS

I ———·—·— I

a
b
c

1

*Fig. 3*

2

3

Europäisches Patentamt

**EUROPÄISCHER RECHERCHENBERICHT**

Nummer der Anmeldung

EP 89 11 4081

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CHEMICAL ABSTRACTS, Band 101, nr. 18, Oktober 1984, Seite 128, Zusammenfassung Nr. 154238z, Columbus, Ohio, US; & JP-A-59 97 527 (SUMITOMO ALUMINIUM SMELTING CO., LTD) 05-06-1984 * Insgesamt * --- | 2 | C 01 F 7/02<br>C 01 F 7/30<br>C 09 K 3/14 |
| A | CHEMICAL ABSTRACTS, Band 104, Nr. 10, März 1986, Seite 138, Zusammenfassung Nr. 71186s, Columbus, Ohio, US; & CS-A-220 144 (Z. RYTIR et al.) 15-10-1985 --- | 2 | |
| A | GB-A-1 058 311 (PITTSBURGH PLATE GLASS) * Ansprüche 1,4,5 * | 5 | |
| A | * Seite 2, Zeilen 37-40 * | 4 | |
| A | * Figuren * --- | 8 | |
| A | CHEMICAL ABSTRACTS, Band 96, Nr. 6, Februar 1982, Seite 688, Zusammenfassung Nr. 45189s, Columbus, Ohio, US; S. KITTAKA et al.: "Spherical particles and their surface properties. III. Formation of spherical particles of metal oxides by molecular oxygen-molecular hydrogen flame fusion", & BULL. CHEM. SOC. JPN. 1981, 54(10), 2882-5 ------ | | RECHERCHIERTE SACHGEBIETE (Int. Cl.5)<br><br>C 01 F 7/00 |

Der vorliegende Recherchenbericht wurde für alle Patentansprüche erstellt

| Recherchenort | Abschlußdatum der Recherche | Prüfer |
|---|---|---|
| DEN HAAG | 23-10-1989 | ZALM W.E. |